# EUROPÄISCHE PATENTSCHRIFT

(11) **EP 4 093 997 B1**
(45) Veröffentlichungstag und Bekanntmachung des Hinweises auf die Patenterteilung: **15.01.2025**
(21) Anmeldenummer: 21701756.5
(22) Anmeldetag: 22.01.2021
(51) Int. Cl.: F16K 1/44, F16K 31/122

(54) **VENTIL UND VERFAHREN ZUM REINIGEN**
VALVE AND CLEANING METHOD
SOUPAPE ET PROCÉDÉ DE NETTOYAGE

(30) Priorität: 24.01.2020 DE 102020000450
(43) Veröffentlichungstag der Anmeldung: 30.11.2022
(73) Patentinhaber: GEA Tuchenhagen GmbH, 21514 Büchen (DE)
(72) Erfinder: BURMESTER, Jens, 23883 Grambek (DE)
(74) Vertreter: Hauck Patentanwaltspartnerschaft mbB
(86) Internationale Anmeldenummer: PCT/EP2021/051414
(87) Internationale Veröffentlichungsnummer: WO 2021/148583

(56) Entgegenhaltungen:
- EP-A1- 0 625 250
- EP-A1- 1 525 415
- EP-A1- 1 581 757
- WO-A1-2019/020361
- DE-A1- 102011 103 371
- US-A- 3 643 679

## Beschreibung

Die Erfindung betrifft ein Ventil nach dem Oberbegriff von Anspruch 1 und ein Verfahren nach dem Oberbegriff von Anspruch 10.

Ventile der gattungsgemäßen Art werden in Anlagen zur Herstellung von Lebensmitteln, Getränken, Medikamenten und feinchemischen Produkten sowie in der Biotechnologie eingesetzt.

Diese Anwendungen bedingen eine hygienische Gestaltung des Ventiles. Insbesondere muss eine gründliche Reinigung möglich sein.

Unter der Bezeichnung Doppelsitzventil ist ein Typ Ventile bekannt, in welchem zwei Schließglieder mit einem jeweils zugeordneten Ventilsitz in dichtenden Kontakt bringbar sind. Zwischen den Schließgliedern befindet sich ein so genannter Leckageraum. Es gilt nun, die Ventilsitze sicher zu reinigen. In sitzreinigungsfähigen Doppelsitzventilen ist dies gegeben. Diese sind eingerichtet, jeweils ein Schließglied von dem ihm zugeordneten Ventilsitz abzuheben, während das andere Schließglied in dichtendem Kontakt verbleibt. Reinigungsflüssigkeit strömt über den freigelegten Ventilsitz und reinigt diesen sowie das Schließglied. Die Flüssigkeit kann über den Leckageraum abgeführt werden.

Solche sitzreinigungsfähigen Doppelsitzventile sind im Stand der Technik bekannt.

Die WO 2009/115255 A1 und EP 0 646 741 B1 zeigen sitzreinigungsfähige Doppelsitzventile, in denen auch eine Dichtung an einer Ventilstange in einem Reinigungsschritt zur Reinigung freilegbar ist. Beide Dokumente zeigen solche Anordnungen, die EP 0 646 741 B1 zeigt zusätzlich eine Reinigung der antriebsseitigen Dichtung, welche auf einem Schließgliedabschnitt gleitend ausgeführt ist. Ein noch älteres Dokument ist die DE 41 18 874 A1, die ebenfalls eine Reinigung der antriebsseitigen Dichtung zeigt.

In der EP 0 646 741 B1 ist die Reinigungsstellung für die erwähnte Dichtung an die Reinigungsstellung der Hauptdichtungen an den Ventilsitzen gekoppelt. Der mit einem Druckmittel betriebene Antrieb ist daher so ausgelegt, zusätzlich zum Vollhub oder Haupthub noch einen Teilhub auszuführen. Die DE 41 18 874 A1 und WO 2009/115255 A1 machen keine näheren Ausführungen zu den Antrieben.

Sitzreinigungsfähige Doppelsitzventile können als so genannte Tankbodenventile ausgeführt sein, mit denen der Auslauf eines Tanks mit einem Rohrleitungssystem geschaltet verbindbar ist. Die WO 2019/020361 A1 schlägt ein solches Tankbodenventil vor.

Aus DE 10 2011 103 371 A1 sind ein Ventil und ein Verfahren zum Betreiben eines Ventils bekannt, bei dem ein zwischen einem ersten Schließglied und einem zweiten Schließglied vorhandener Leckageraum in einer Betriebsart als Teil eines Produktpfads zwischen einem ersten bzw. zweiten Anschluss und einem dritten Anschluss des Ventils genutzt wird, so dass Produkt oder eine Produktkomponente durch den Leckageraum geleitet wird. Dazu kann das erste Schließglied mit einem ersten Schließgliedsitz außer Anlage gebracht werden, während das zweite Schließglied mit einem zweiten Schließgliedsitz weiterhin dichtend in Anlage steht, oder das zweite Schließglied kann von dem zweiten Schließgliedsitz außer Anlage gebracht werden, während das erste Schließglied mit dem ersten Schließgliedsitz weiterhin dichtend in Anlage steht. Es kann folglich für die vorgenannte Betriebsart das erste oder zweite Schließglied getaktet bzw. angelüftet werden.

Weitere Doppelsitztankbodenventile sind aus WO 93/16307 A1 und WO 2004/063609 A1 bekannt. Diese Tankbodenventile sind in herkömmlicher Weise für eine Sitzreinigung ausgestaltet.

Es war nun Aufgabe der Erfindung, die Reinigungsfähigkeit des Ventils zu verbessern und ein Reinigungsverfahren vorzustellen.

Diese Aufgabe wird gelöst durch ein Ventil mit den Merkmalen des Anspruchs 1 und einem Verfahren mit den Merkmalen des Anspruchs 10.

Die Erfindung fußt auf der Erkenntnis, dass prozesstechnisch nicht nur die bekannten Reinigungsstellungen zum Reinigen des Ventils zur Verfügung stehen. Entgegen der Denkweise im Stand der Technik ist es auch möglich, in einer Offenstellung des Ventils solche Teile zu reinigen, die bisher in dieser Schaltstellung unzugänglich waren. Es wird daher vorgeschlagen, einen Zwischenraum, der von einem erstem und einem zweiten Schließglied umgeben ist, zum Innenraum des Ventils hin zu öffnen. Der Zwischenraum, auch Leckageraum genannt, dient dazu, Leckage abzuführen und sichtbar zu machen, die durch Verschleiß von Dichtungen an den Schließgliedern entstehen kann. Die Öffnung des Zwischenraums zum Innenraum hin wird durch einen Spalt zwischen erstem und zweitem Schließglied erreicht. Daher ist die Verstellvorrichtung zum Verstellen der Schließglieder dazu eingerichtet, zusätzlich dann einen Spalt zwischen den Schließgliedern zu schaffen, wenn diese gleichzeitig von ihrem jeweils zugeordneten Ventilsitz abgehoben sind. Hierdurch steht ein kräftiger Reinigungsstrom zur Verfügung, der eine Reinigung des Zwischenraums und der Schließglieder in bisher nicht dagewesener Qualität bewirkt. Besonders vorteilhaft ist dies in so genannten Tankbodenventilen gegeben, da in dieser Anwendung regelmäßig ein geringer Druck der Reinigungsflüssigkeit beobachtet wird, die durch den Anschluss des Ventils eintritt, an den der Tank angeschlossen ist.

In einer ersten Weiterbildung ist vorgesehen, dass die Verstellvorrichtung eine Baugruppe umfasst, die mit einem der Schließglieder zusammenwirkt und dieses in der Offenstellung gegenüber einem anderen Schließglied unter Bildung des Spalts verstellt. Eine zusätzliche Baugruppe, die speziell für diese Funktionalität in der Verstellvorrichtung vorgesehen ist, erlaubt, diese neuartige Reinigungsstellung möglichst gut auszuführen. Durch die Baugruppe kann die Verstellvorrichtung auf eine möglichst gute Ansteuerung der Schließglieder eingestellt werden, insbesondere was die Spaltweite angeht. Auch die Kräfte zum Schalten können optimiert werden. Denkbar sind Wirkprinzipien für diese Baugruppe, die beispielsweise auf den im Stand der Technik benutzten elektromagnetischen, hydraulischen oder pneumatischen Prinzipien beruhen.

Vorteilhaft ist es, gemäß einer Weiterbildung die Baugruppe mit einem Kolben zu versehen, der mit einem Druckmittel, beispielsweise Luft, beaufschlagbar ist und unter der Druckmittelbeaufschlagung durch Stellungsverlagerung die zusätzliche Stellung gemäß Anspruch 1 bewirkt.

Eine kostengünstige und zuverlässige Ausführung sieht vor, den Kolben mit einem Absatz an einer der Ventilstangen eines Schließgliedes zusammenwirken zu lassen. Der Kolben gelangt bei Druckbeaufschlagung in Eingriff mit dem Absatz, so dass die Ventilstange bei der Bewegung des Kolbens mitgenommen wird.

Vorteilhaft kann eine Verstellvorrichtung, die zur Verstellung der Schließglieder eingerichtet ist, modular mit wenigstens zwei Antriebsmodulen gestaltet sein, wobei eines der Antriebsmodule die zusätzliche Reinigungsstellung bewirkend ausgeführt ist. Dies ist kostengünstig in der Herstellung und erlaubt zudem eine Anpassung noch beim Kunden, das heißt in der Prozessanlage. Die Antriebsmodule sind vorzugsweise miteinander lösbar koppelbar und in einer Reihe angeordnet.

Bei einem Aufbau der Verstellvorrichtung aus Antriebsmodulen ist es vorteilhaft, die Baugruppe in einem eigenständigen Antriebsmodul anzuordnen. Die Gestaltung ist vorzugsweise so gewählt, dass dieses Antriebsmodul nachrüstbar in die Verstellvorrichtung integrierbar ist. Hierzu kann sie eigene Abschnitte der Ventilstangen umfassen, die mit den Stangen des Ventils und der anderen Antriebsmodule koppelbar sind.

Die Vorzüge der Modularität lassen sich steigern, wenn die Verstellvorrichtung ein Antriebsmodul umfasst, welches die Schließglieder ansteuert, um sie in eine Position zu bewegen, die der Offenstellung des Ventils entspricht.

Eine einfache, kostengünstige Gestaltung der Antriebsmodule ist möglich, wenn das die Baugruppe umfassende Antriebsmodul zwischen dem Gehäuse des Ventils und dem die Offenstellung des Ventils erzeugenden Antriebsmodul angeordnet ist. Dies macht Änderungen an den bisher bekannten Antriebsmodulen für die Offenstellung unnötig.

Die Vorteile der Modularität werden vertieft und kostengünstig erreicht, insbesondere eine leichte Nachrüstbarkeit ermöglicht, wenn wenigstens eine der Ventilstange des Ventils, vorzugsweise alle Ventilstangen, mehrteilig aufgebaut ist. Die Mehrteiligkeit ist so gewählt, dass die Modularität unterstützt wird. Dies ist beispielsweise gegeben, wenn sich die Teile der Ventilstange nur über einzelne Antriebsmodule erstrecken.

Das Verfahren nach Anspruch 10 sieht vor, beide Schließglieder von ihren zugeordneten Ventilsitzen abzuheben und dabei gleichzeitig einen Spalt zwischen den Schließgliedern auszubilden, der Zwischenraum und Innenraum miteinander verbindet. Auf diese Weise wird das Reinigungsverfahren um eine Stellung der Schließglieder erweitert, in der ein Reinigungsmittel in das Ventil eingelassen wird und dann eine vollumfängliche Reinigung bewirkt.

Anhand eines Ausführungsbeispiels und seiner Weiterbildungen soll die Erfindung näher erläutert werden. Zudem soll die Darstellung der Vorteile vertieft werden.

Es zeigen:
**Fig. 1****:** Ein Doppelsitzventil in Tankbodenausführung in Offenstellung;
**Fig. 2****:** Das Doppelsitzventil gemäß Beispiel mit zusätzlicher Reinigungsstellung im Ausschnitt;
**Fig. 3****:** Verstellvorrichtung für das Doppelsitzventil gemäß Beispiel.

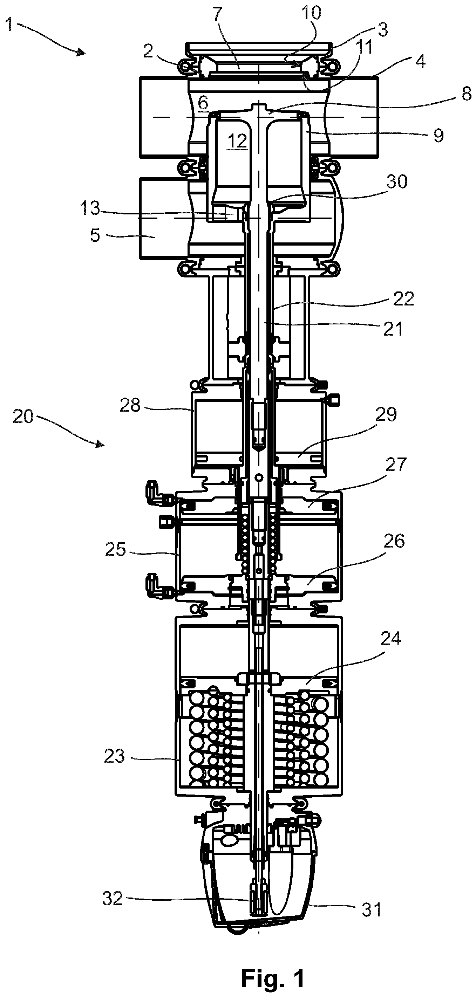

In Fig. 1 ist ein Längsschnitt durch ein mit einem Tank verbindbares und reinigbares Ventil 1 gezeigt.

Das Ventil 1 umfasst ein einteiliges oder mehrteiliges Gehäuse 2 mit einem ersten Anschluss 3, der mit einem nicht gezeigten Tank oder Behälter verbindbar ist. Dies kann durch einen Klemmflansch oder eine Schweißverbindung ausgeführt sein. Am Gehäuse 2 ist ein zweiter Anschluss 4 ausgebildet, der mit einer Rohrleitung einer Prozessanlage verbindbar ist. Ein dritter Anschluss 5 ist vorgesehen und mit einer Einrichtung zur Leckageanzeige und/oder -abfuhr verbindbar. Das Gehäuse definiert einen Innenraum 6, der ersten und zweiten Anschluss 3 und 4 fluidführend miteinander verbindet. Zwischen erstem und zweitem Anschluss 3 und 4 ist im Gehäuse ein Durchlass 7 ausgebildet.

Im Innenraum befinden sich ein erstes Schließglied 8 und ein zweites Schließglied 9.

Das erste Schließglied 8 wirkt mit einem ersten Ventilsitz 10 zusammen, der als Zylinderfläche im Durchlass 7 ausgebildet ist. Auf einer dem Innenraum 6 zugewandten Seite des ersten Ventilsitzes 10 ist ein zweiter Ventilsitz 11 ausgeformt, der vorzugsweise stufenartig ausgebildet ist. Durch die Stufenform bildet der zweite Ventilsitz 11 einen axialen Anschlag, der die Bewegung des zweiten Schließgliedes 9 begrenzt.

Das zweite Schließglied 9 ist becherförmig geformt. In seinem Inneren befindet sich ein Zwischenraum 12. Das erste Schließglied 8 ist in dem zweiten Schließglied 9 derart aufnehmbar, dass der Zwischenraum 12 gegen den Innenraum 6 abgedichtet ist. Ein Kanal 13 ist im zweiten Schließglied 9 auf einer dem ersten Schließglied 8 abgewandten Seite ausgebildet und schafft eine Fluidverbindung des Zwischenraums 12 mit dem dritten Anschluss 5. Reinigungsflüssigkeit oder Leckage durch undichte Stellen zwischen Ventilsitzen und Schließgliedern gelangt zunächst in den Zwischenraum 12 und durch den Kanal 13 zum dritten Anschluss 5.

Die Schließglieder 8 und 9 sind mit Hilfe einer Verstellvorrichtung 20 bewegbar.

Die Verstellvorrichtung 20 ist vorteilhaft modular aufgebaut und weist mehrere Antriebsmodule auf, die in diesem Beispiel druckmittelbetrieben und teilweise federbelastet ausgeführt sind.

Mit dem ersten Schließglied 8 ist eine erste Ventilstange 21 verbunden, die verschiebbar in einer als Hohlstange ausführten zweiten Ventilstange 22 angeordnet ist. Diese zweite Ventilstange 22 ist mit dem zweiten Schließglied 9 verbunden.

Die Verstellvorrichtung 20 umfasst ein erstes Antriebsmodul 23, in welchem ein erster Kolben 24 angeordnet ist. Dieser wirkt mit der ersten Ventilstange 21 zusammen. Das erste Antriebsmodul 23 erlaubt es, das erste Schließglied 8 zwischen zwei Stellungen hin und her zu bewegen. In der ersten Stellung befindet sich das erste Schließglied 8 in dichtendem Kontakt mit dem ersten Ventilsitz 10. In der zweiten Stellung befindet sich das Schließglied 8 nach einer Bewegung in Richtung der Verstellvorrichtung 20 in einer zurückgezogenen Stellung innerhalb des Innenraums 6. Das zweite Schließglied 9 wird bei dieser Bewegung mitgenommen, das Ventil 1 befindet sich dann in einer Offenstellung, in der eine Strömungsverbindung zwischen ersten und zweitem Anschluss 3 und 4 besteht.

Die Verstellvorrichtung 20 umfasst ein zweites Antriebsmodul 25, welches lösbar mit dem ersten Antriebsmodul 23 verbunden ist, und in welchem ein zweiter Kolben 26 angeordnet ist, welcher mit der ersten Ventilstange 21 zusammenwirkt. Bei Beaufschlagung dieses Kolbens mit einem Druckmittel übt der zweite Kolben 26 eine Kraft auf die erste Ventilstange 21 aus und bewirkt eine Verschiebung der ersten Ventilstange 21 in Richtung des ersten Anschlusses 3. Dadurch wird das mit der ersten Ventilstange 21 verbundene erste Schließglied 8 aus dem ersten Ventilsitz 10 auf eine dem Innenraum 6 abgewandte Seite des ersten Ventilsitzes 10 angelüftet. Diese Stellung erlaubt die Reinigung insbesondere des ersten Ventilsitzes 10. Das zweite Schließglied 9 steht währenddessen in dichtendem Kontakt mit dem ihm zugeordneten zweiten Ventilsitz 11. Das zum Reinigen benutzte Fluid strömt nun durch den Zwischenraum 12, anschließend durch den Kanal 13 und verlässt das Ventil durch den dritten Anschluss 5.

Im zweiten Antriebsmodul 25 ist ein dritter Kolben 27 vorgesehen. Dieser wirkt mit der zweiten Ventilstange 22 zusammen. Dritter Kolben 27 und zweite Ventilstange 22 sind so eingerichtet, dass bei Druckbeaufschlagung des dritten Kolbens 27 das zweite Schließglied 9 aus dem zweiten Ventilsitz 11 in den Innenraum 6 angelüftet wird. Das erste Schließglied 8 befindet sich noch im dichtenden Kontakt mit dem ersten Ventilsitz 10. Diese Stellung der Schließglieder 8 und 9 erlaubt die Reinigung insbesondere des zweiten Ventilsitzes 11. Das Reinigungsfluid wird auch hier durch Zwischenraum 12, Kanal 13 und dritten Anschluss 5 abgeführt.

Die Verstellvorrichtung 20 umfasst ein drittes Antriebsmodul 28, welches lösbar mit dem zweiten Antriebsmodul 25 verbunden ist und einen vierten Kolben 29 aufweist. Um eine zusätzliche Reinigungsstellung zu erzeugen, kann dieser mit Druckmittel beaufschlagt werden, wenn bereits der erste Kolben 24 mit Druck beaufschlagt worden ist. Der erste Kolben 24 kann jedoch mit Druck beaufschlagt werden, ohne den vierten Kolben 29 anzusteuern. Durch die Beaufschlagung des ersten Kolbens 24 mit einem Druckmittel werden erstes und zweites Schließglied 8 und 9 von erstem und zweitem Ventilsitz 10 und 11 abgehoben und in den Innenraum 6 verschoben. Bei Druckbeaufschlagung gelangt der vierte Kolben 29 in Eingriff mit der zweiten Ventilstange 22 und verschiebt diese und damit mittelbar das zweite Schließglied 9 in Richtung der Verstellvorrichtung 20. Hierdurch entsteht ein Spalt zwischen ersten und zweitem Schließglied 8 und 9, welcher den Eintritt eines Reinigungsmittels aus dem Innenraum 6 in den Zwischenraum 12 ermöglicht. Es steht eine besonders kräftige Reinigungsströmung zur Verfügung, so dass in dieser Stellung von erstem und zweitem Schließglied 8 und 9 sämtliche produktberührten Oberflächen des Ventils 1 einschließlich Innenraum 6 und Zwischenraum 12 gründlich gereinigt werden. Das Ventil 1 übertrifft damit die hygienischen Eigenschaften der bisherigen Ventile des Standes der Technik deutlich.

Der an diesem Beispiel vorgestellte modulare Aufbau der Verstellvorrichtung 20 mit drei Antriebsmodulen 23, 25 und 28 erlaubt kostengünstig eine Anpassung der Ventilanordnung an die Kundenbedürfnisse. Insbesondere ist eine Nachrüstung des dritten Antriebsmodules 28 mit der zusätzlichen Reinigungsstellung auch an bereits bestehenden Anlagen und deren Ventilen möglichen.

Das Ventil 1 kann zusätzlich eine Sprühdüse 30 umfassen, welche im zweiten Schließglied 9 angeordnet ist und die erste Ventilstange 21 bei ihrem Austritt aus der zweiten Ventilstange 22 umgibt. Diese Sprühdüse 30 kann durch einen Spalt zwischen erster und zweiter Ventilstange 21 und 22 mit Reinigungsfluid beaufschlagt werden.

Die passende Druckbeaufschlagung der Kolben 24, 26, 27 und 29 kann vorteilhaft durch einen mit Druckstellventilen ausgestatteten Steuerkopf 31 erfolgen, der an dem Ventil 1 angebracht ist. Die Druckstellventile werden gemäß Anforderungen beschaltet, die von einer Anlagensteuerung an eine Elektronik des Steuerkopfes 31 übermittelt werden. Der Steuerkopf 31 kann ein Messmittel umfassen, welches die Stellung eines an der ersten Ventilstange 21 angeordneten Messzieles 32 bestimmt. Daraus lässt sich auf die Stellung von ersten und zweitem Schließglied 8 und 9 schließen. Diese Information kann an die Anlagensteuerung übertragen werden.

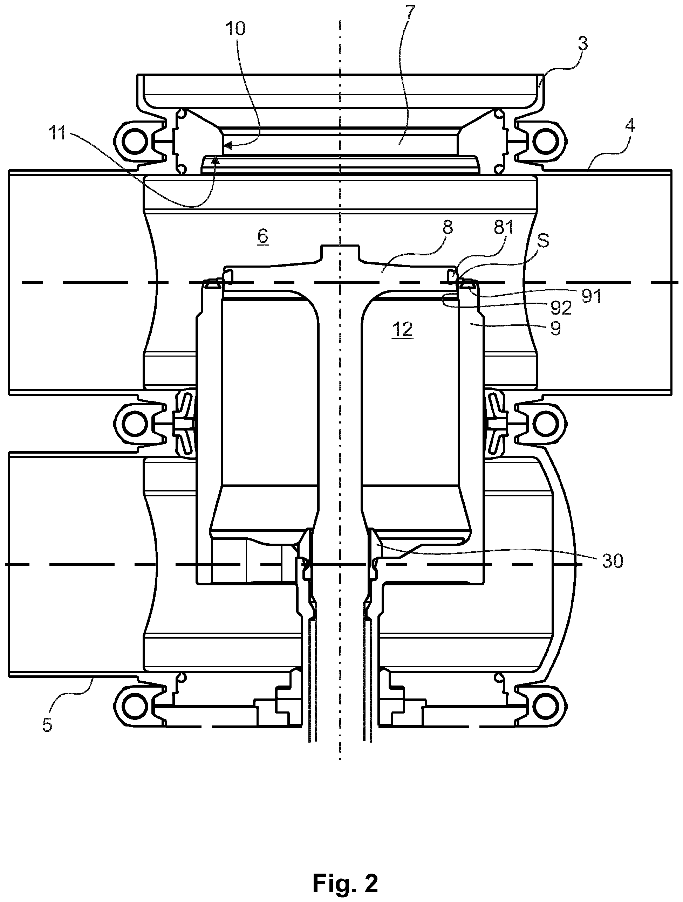

In Fig. 2 ist die zusätzliche Reinigungsstellung des Ventils 1 in einer Detailansicht veranschaulicht. Erstes Schließglied 8 und zweites Schließglied 9 sind in den Innenraum 6 zurückgezogen und geben den Durchlass 7 frei, so dass Fluid zwischen erstem Anschluss 3 und zweitem Anschluss 4 strömen kann.

Der erste Ventilsitz 10, der in Schließstellung des Ventils 1 mit einer am ersten Schließglied 8 vorgesehen ersten Dichtung 81 in dichtendem Kontakt steht, liegt in dieser Stellung des Ventils 1 frei. Ebenso liegt der zweite Ventilsitz 11, der in Schließstellung des Ventils 1 mit einer am zweiten Schließglied vorgesehenen zweiten Dichtung 91 in dichtendem Kontakt steht, liegt nun ebenfalls frei. Vorteilhaft können die erste Dichtung 81 als Radialdichtung und die zweite Dichtung 91 als Axialdichtung ausgeführt sein. Insbesondere die radiale Ausführung der ersten Dichtung 81 erlaubt es, das erste Schließglied 8 einerseits über den Durchlass 7 hinaus in den ersten Anschluss 3 und in das zweite Schließgliedes 9 hinein zu verfahren.

In der regulären Offenstellung des Ventils 1 sind erstes und zweites Schließglied 8 und 9 ebenfalls in den Innenraum 6 zurückgezogen und der Durchlass 7 ist geöffnet, der Durchlass 7 ist also durchlässig für Fluid. In der Offenstellung steht jedoch die erste Dichtung 81 in dichtendem Kontakt mit einem am zweiten Schließglied 9 vorgesehenen inneren Sitz 92. Dieser ist so ausgeführt, dass Innenraum 6 und der Zwischenraum 12 im zweiten Schließglied 9 fluidtechnisch voneinander getrennt sind.

In der in Fig. 2 gezeigten Stellung sind jedoch das erste Schließglied 8 und das zweite Schließglied 9 so gegeneinander verschoben, dass zwar der Durchlass 7 freigegeben ist, die erste Dichtung 81 jedoch nicht in dichtendem Kontakt mit dem inneren Sitz 92 steht. Zwischen ersten und zweitem Schließglied 8 und 9 ist ein Spalt S ausgebildet, welcher eine Fluidströmung zulässt. Die Spaltweite kann vorteilhaft so bemessen sein, dass die sich einstellende Strömung durch den Spalt S eine Reinigung der ersten Dichtung 81 und des inneren Sitzes 92 sowie an Dichtung und Sitz angrenzenden Oberflächen von erstem und zweitem Schließglied 8 und 9 bewirkt. Es ist vorteilhaft, dass zweite Schließglied 9 für die Stellung nach Fig. 2 in Richtung der Verstellvorrichtung 20, in Fig. 2 nach unten, und somit weg vom Durchlass 7 zu verschieben und damit das zweite Schließglied freizugeben. Dies verbessert das Reinigungsergebnis.

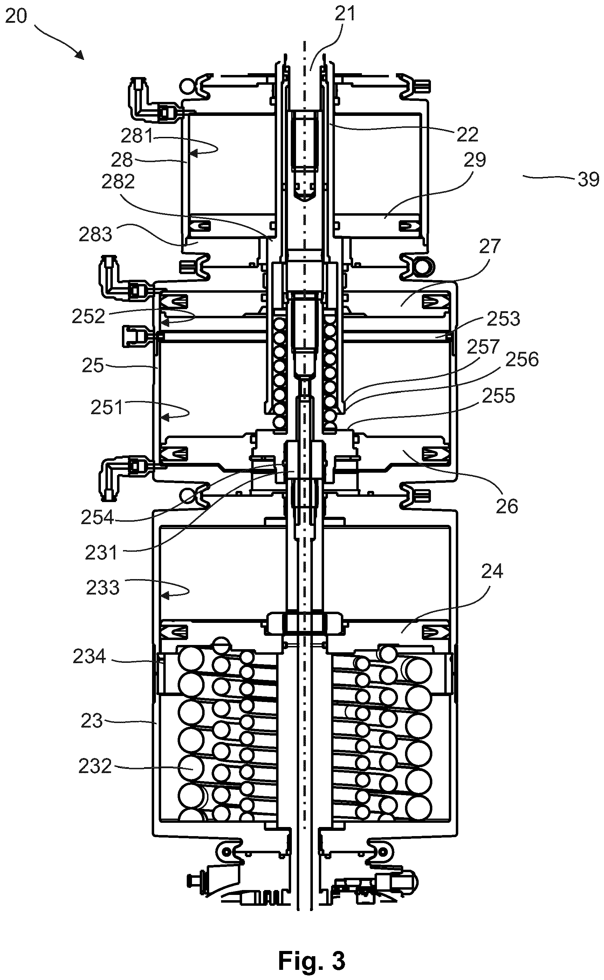

Der Aufbau der Verstellvorrichtung 20 dieses Beispiels ist in Fig. 3 genauer dargestellt.

Das erste Antriebsmodul 23, welches das Ventil 1 durch Verschieben von erstem und zweitem Schließglied 8 und 9 in den Innenraum 6 in eine Offenstellung bringt, umfasst den ersten Kolben 24. Der erste Kolben 24 ist auf einer Antriebsstange 231 befestigt, so dass eine Bewegung des ersten Kolbens 24 in einer Bewegung der Antriebsstange 231 resultiert. Eine Bewegung des ersten Kolbens 24 ist durch Druckmittelbeaufschlagung bewirkbar. Der erste Kolben 24 wird durch Druckmittelbeaufschlagung, beispielsweise Druckluft, gegen die Kraft einer Feder 232 oder eines Federpakets verschoben. Die Verschiebung des ersten Kolbens 24 erfolgt in gleitendem Kontakt mit einer ersten Lauffläche 233, die als Zylinderfläche geformt sein kann. Die Verschiebung wird durch einen ersten Anschlag 24 begrenzt. Der erste Anschlag 24 kann als ein umlaufender Vorsprung, der als ringartiges Bauteil ausgeführt sein kann, gestaltet sein.

Das zweite Antriebsmodul 25 ist auf einer den Schließgliedern 8 und 9 sowie dem Gehäuse 2 zugewandten Seite des ersten Antriebsmoduls 23 angeordnet und mit diesem verbunden. Die Verbindung ist vorteilhaft lösbar ausgeführt, wodurch das zweite Antriebsmodul 25 eine eigene kommerzielle Einheit ist.

Im zweiten Antriebsmodul 25 ist der zweite Kolben 26 verschiebbar angeordnet. Die Verschiebung erfolgt in gleitendem Kontakt mit einer zweiten Lauffläche 251. Im zweiten Antriebsmodul 25 ist zudem ebenfalls verschiebbar der dritte Kolben 27 angeordnet, der in gleitendem Kontakt mit einer dritten Lauffläche 252 steht. Beide Kolben 26 und 27 sind mit einem Druckmittel beaufschlagbar, um die Verschiebung zu bewirken. Druckbeaufschlagung einer der Kolben 26 und 27 führt zu einer Bewegung in Richtung des jeweils anderen Kolbens. Zwischen den Kolben 26 und 27 und den Laufflächen 251 und 252 ist ein zweiter Anschlag 253 vorgesehen, der als ringartiges Bauteil ausgeführt ist und einen Vorsprung für jede der zylindrischen Laufflächen 251 und 252 bildet. Auf diese Weise bildet ein Bauteil die Bewegungsbegrenzung für beide Kolben 26 und 27.

Das zweite Antriebsmodul 24 ist eingerichtet, jeweils eines der Schließglieder 8 und 9 in eine Reinigungsstellung zu bringen, in welcher eines der Schließglieder von dem ihm zugeordneten Ventilsitz 10 und 11 abgehoben ist, während das jeweils andere Schließglied 8 und 9 in dichtendem Kontakt verbleibt. Hierzu sind zweite Lauffläche 251 und zweiter Anschlag 253 so dimensioniert, einen längeren Verstellweg des zweiten Kolbens 26 als der Verstellweg des ersten Kolbens 24 zu erlauben. Die Antriebsstange 231 ist in einer Gleitbuchse 254 verschiebbar aufgenommen, welche Gleitbuchse 254 in einer Nabe 255 des zweiten Kolbens 26 vorgesehen ist. Durch Verstellen des ersten Kolbens 24 wird das erste Schließglied 8 in Kontakt mit dem ersten Ventilsitz 10 gebracht. Dabei wird der zweite Kolben 26 mitgenommen. Druckbeaufschlagung des zweiten Kolbens 26 bewegt diesen nun zum zweiten Anschlag 253 und drückt über die zweite Ventilstange 22 das erste Schließglied aus dem ersten Ventilsitz 10 in den ersten Anschluss 3. Dabei wird die Antriebsstange 231 ein Stück weit aus der Gleitbuchse 254 herausgezogen.

Die Reinigungsstellung des zweiten Schließgliedes 9 wird durch den dritten Kolben 27 bewirkt, indem dieser mit Druckmittel beaufschlagt und dadurch in Richtung des zweiten Kolbens 26 bewegt wird. Der dritte Kolben 27, der verschiebbar in gleitendem Kontakt auf der zweiten Ventilstange 22 angeordnet ist, kommt dabei in Kontakt mit einem vierten Anschlag 257, der am Ende 256 der zweiten Ventilstange ausgebildet ist. Dadurch wird die zweite Ventilstange 22 mitgenommen, bis der dritte Kolben 27 am zweiten Anschlag 253 ankommt. Durch die derart ausgelöste Bewegung der zweiten Ventilstange 22 wird das zweite Schließglied 9 vom zweiten Ventilsitz 11 abgehoben.

Im dritten Antriebsmodul 28 ist der vierte Kolben 29 verschiebbar auf der zweiten Ventilstange 22 und mit einer an einem Gehäuse vorgesehenen vierten Lauffläche 281 zusammenwirkend angeordnet. An der zweiten Ventilstange 22 ist ein Absatz 282 ausgebildet, der als Anschlag für den vierten Kolben 29 wirkt. Bei Druckmittelbeaufschlagung des vierten Kolbens 29 wird dieser in Richtung der anderen Antriebsmodule 24 und 25 bewegt, bis er eine gehäuseseitige Wegbegrenzung 283 erreicht. Vor Erreichen dieser Wegbegrenzung 283 kommt der vierte Kolben 29 in Eingriff mit dem Absatz 282 und nimmt in der Folge die zweite Ventilstange 22 mit. Hierdurch werden in der Offenstellung des Ventils 1 die Schließglieder 8 und 9 wie in Fig. 2 gezeigt auseinander gefahren bis sich der gewünschte Spalt S eingestellt hat.

Die Modularität des Aufbaus wird verbessert, wenn wenigstens eine der Ventilstangen 21 und 22, vorzugsweise beide, mehrteilig aufgebaut sind, wobei die

Stangenabschnitte vorzugsweise den einzelnen Modulen 23, 25 und 28 zugeordnet sind.

Dieser modulare Aufbau der Verstellvorrichtung 20 ist vorteilhaft, da einzelne Funktionen wie Reinigungsstellungen der einzelnen Schließglieder durch Nachrüsten des zweiten Antriebsmoduls 25 nachträglich eingebaut werden können. Auch die zusätzliche Reinigungsstellung, die durch das dritte Antriebsmodul 28 bewirkt wird, ist nachrüstbar. Auf diese Weise lassen sich einerseits Produktionskosten senken und andererseits Kundenbedürfnisse durch eine auf den Kunden abgestimmte Verstellvorrichtung 20 gezielt befriedigen.

Die Erfindung wurde am Beispiel eines Tankbodenventils beschrieben, ist jedoch auch an Ventil nach WO 2009/115255 A1 anwendbar.

### Bezugszeichenliste

- 1: Ventil
- 2: Gehäuse
- 3: erster Anschluss
- 4: zweiter Anschluss
- 5: dritter Anschluss
- 6: Innenraum
- 7: Durchlass
- 8: erstes Schließglied
- 9: zweites Schließglied
- 10: erster Ventilsitz
- 11: zweiter Ventilsitz
- 12: Zwischenraum
- 13: Kanal
- 20: Verstellvorrichtung
- 21: erste Ventilstange
- 22: zweite Ventilstange
- 23: erstes Antriebsmodul
- 24: erster Kolben
- 25: zweites Antriebsmodul
- 26: zweiter Kolben
- 27: dritter Kolben
- 28: drittes Antriebsmodul
- 29: vierter Kolben
- 30: Sprühdüse
- 31: Steuerkopf
- 32: Messziel
- 81: erste Dichtung
- 91: zweite Dichtung
- 92: innerer Sitz
- 231: Antriebsstange
- 232: Federpaket
- 233: erste Lauffläche
- 234: erster Anschlag
- 251: zweite Lauffläche
- 252: dritte Lauffläche
- 253: zweiter Anschlag
- 254: Gleitbuchse
- 255: Nabe
- 256: Ende der zweiten Ventilstange
- 257: vierter Anschlag
- 281: vierte Lauffläche
- 282: Absatz
- 283: Wegbegrenzung

- S: Spalt

## Patentansprüche

1. Ventil (1) mit einem Gehäuse (2), welches einen Innenraum (6) begrenzt, einem ersten Anschluss (3), einem zweiten Anschluss (4), einem Durchlass (7), welcher den ersten Anschluss (3) mit dem zweiten Anschluss (4) fluidführend verbindet, einem ersten Schließglied (8) und einem zweiten Schließglied (9), welche Schließglieder (8, 9) in dem Innenraum (6) aufgenommen sind und einen Zwischenraum (12) umgeben, welcher mit einem dritten Anschluss (5) verbunden ist, und einer Verstellvorrichtung (20), die eingerichtet ist, in einer Schließstellung das erste Schließglied (8) mit einem im Durchlass (7) ausgebildeten ersten Ventilsitz (10) und das zweite Schließglied (9) mit einem im Durchlass ausgebildeten zweiten Ventilsitz (11) in dichtenden Kontakt zu bringen und in einer Offenstellung erstes und zweites Schließglied (8, 9) von erstem und zweitem Ventilsitz (10, 11) zu lösen, wobei das erste Schließglied (8) dichtend im zweiten Schließglied (9) aufgenommen ist, **dadurch gekennzeichnet, dass** das zweite Schließglied (9) becherförmig geformt ist, wobei sich in seinem Inneren der Zwischenraum (12) befindet,
wobei das erste Schließglied (8) in dem zweiten Schließglied (9) derart aufnehmbar ist, dass der Zwischenraum (12) gegen den Innenraum (6) abgedichtet ist, und dass die Verstellvorrichtung (20) eingerichtet ist, zwischen erstem und zweitem Schließglied (8, 9) einen den Zwischenraum (12) mit dem Innenraum (6) verbindenden Spalt (S) auszubilden wenn gleichzeitig erstes und zweites Schließglied (8, 9) durch die Verstellvorrichtung (20) von erstem und zweitem Ventilsitz (10, 11) abgehoben sind.

2. Ventil nach Anspruch 1, **dadurch gekennzeichnet, dass** die
Verstellvorrichtung (20) eine Baugruppe (28) umfasst, die mit einem der Schließglieder (8, 9) zusammenwirkt und dieses in der Offenstellung gegenüber einem anderen Schließglied (8, 9) unter Bildung des Spalts (S) verstellt.

3. Ventil nach Anspruch 2, **dadurch gekennzeichnet, dass** die Baugruppe (28) einen mit einem Druckmittel beaufschlagbaren Kolben (29) umfasst.

4. Ventil nach Anspruch 3, **dadurch gekennzeichnet, dass** der Kolben (29) mit einem Absatz (282) an einer Ventilstange (22) des Schließgliedes (9) zusammenwirkt.

5. Ventil nach einem der Ansprüche 2 bis 4, **dadurch gekennzeichnet, dass** die Verstellvorrichtung (20) wenigstens zwei Antriebsmodule (23, 25, 28) umfasst.

6. Ventil nach Anspruch 5, **dadurch gekennzeichnet, dass** die Baugruppe in einem eigenständigen Antriebsmodul (28) angeordnet ist.

7. Ventil nach Anspruch 5 oder 6, **dadurch gekennzeichnet, dass** die Verstellvorrichtung (20) ein die Offenstellung des Ventils (1) erzeugendes Antriebsmodul (23) umfasst.

8. Ventil nach Anspruch 7, **dadurch gekennzeichnet, dass** das die Baugruppe umfassende Antriebsmodul (28) zwischen Gehäuse (2) und dem die Offenstellung erzeugenden Antriebsmodul (23) angeordnet ist.

9. Ventil nach einem der Ansprüche 5 bis 8, **dadurch gekennzeichnet, dass** wenigstens eine Ventilstange (21, 22) des Ventils (1) mehrteilig aufgebaut ist.

10. Verfahren zum Reinigen eines Ventils (1), welches einen von einem ersten Schließglied (8) und einem zweiten Schließglied (9) gegen einen Innenraum (6) abgrenzbaren Zwischenraum (12) besitzt und welches einen dem ersten Schließglied (8) zugeordneten ersten Ventilsitz (10) und einem dem zweiten Schließglied (9) zugeordneten zweiten Ventilsitz (11) aufweist, und in einer Schließstellung des Ventils (1) erstes Schließglied (8) mit erstem Ventilsitz (10) und zweites Schließglied (9) mit zweitem Ventilsitz (11) in dichtenden Kontakt gebracht sind, **dadurch gekennzeichnet, dass** das zweite Schließglied (9) becherförmig geformt ist, wobei sich in seinem Inneren der Zwischenraum (12) befindet, wobei das erste Schließglied (8) in dem zweiten Schließglied (9) derart aufnehmbar ist, dass der Zwischenraum (12) gegen den Innenraum (6) abgedichtet ist, und dass das erste Schließglied (8) in eine von einem ersten Ventilsitz (10) abgehobene Stellung und das zweite Schließglied (9) in eine von einem zweiten Ventilsitz (11) abgehobene Stellung gebracht werden und gleichzeitig ein Spalt (S) zwischen erstem Schließglied (8) und zweitem Schließglied (9) ausgebildet wird, der den Zwischenraum (12) mit dem Innenraum (6) verbindet.

## Claims

1. A valve (1) with a housing (2), which delimits an interior space (6), a first connection (3), a second connection (4), a passage (7), which connects the first connection (3) to the second connection (4) in a fluid-conducting manner, a first closing member (8) and a second closing member (9), which closing members (8, 9) are accommodated in the interior space (6) and surround an intermediate space (12), which is connected to a third connection (5), and an adjusting device (20), which is configured to bring the first closing member (8) into sealing contact with a first valve seat (10) formed in the passage (7) and to bring the second closing member (9) into sealing contact with a second valve seat (11) formed in the passage in a closed position and to release the first and second closing members (8, 9) from the first and second valve seats (10, 11) in an open position, wherein the first closing member (8) is accommodated in the second closing member (9) in a sealing manner, **characterized in that** the second closing member (9) is cup-shaped, wherein the intermediate space (12) is located inside it, wherein the first closing member (8) can be accommodated in the second closing member (9) such that the intermediate space (12) is sealed with respect to the interior space (6), and **in that** the adjusting device (20) is configured to form a gap (S) between the first and second closing members (8, 9) that connects the intermediate space (12) to the interior space (6) when at the same time the first and second closing members (8, 9) are lifted from the first and second valve seats (10, 11) by the adjusting device (20).

2. The valve according to claim 1, **characterized in that** the adjusting device (20) comprises an assembly (28) that interacts with one of the closing members (8, 9) and adjusts said closing member in relation to another closing member (8, 9) while forming the gap (S) in the open position.

3. The valve according to claim 2, **characterized in that** the assembly (28) comprises a piston (29) to which a pressure medium can be applied.

4. The valve according to claim 3, **characterized in that** the piston (29) interacts with a shoulder (282) on a valve rod (22) of the closing member (9).

5. The valve according to one of claims 2 to 4, **characterized in that** the adjusting device (20) comprises at least two drive modules (23, 25, 28).

6. The valve according to claim 5, **characterized in that** the assembly is arranged in an independent drive module (28).

7. The valve according to claim 5 or 6, **characterized in that** the adjusting device (20) comprises a drive module (23) generating the open position of the valve (1).

8. The valve according to claim 7, **characterized in that** the drive module (28) comprising the assembly is arranged between the housing (2) and the drive module (23) generating the open position.

9. The valve according to one of claims 5 to 8, **characterized in that** at least one valve rod (21, 22) of the valve (1) is designed in several parts.

10. A cleaning method for a valve (1), which has an intermediate space (12) that can be separated from an interior space (6) by a first closing member (8) and a second closing member (9) and which has a first valve seat (10) associated with the first closing member (8) and a second valve seat (11) associated with the second closing member (9), and the first closing member (8) is brought into sealing contact with the first valve seat (10) and the second closing member (9) is brought into sealing contact with the second valve seat (11) in a closed position of the valve (1), **characterized in that** the second closing member (9) is cup-shaped, wherein the intermediate space (12) is located inside it, wherein the first closing member (8) can be accommodated in the second closing member (9) such that the intermediate space (12) is sealed with respect to the interior space (6), and **in that** the first closing member (8) is brought into a position in which it is lifted from a first valve seat (10) and the second closing member (9) is brought into a position in which it is lifted from a second valve seat (11) and at the same time a gap (S) is formed between the first closing member (8) and the second closing member (9), which gap connects the intermediate space (12) to the interior space (6).

## Revendications

1. Soupape (1) avec un boîtier (2) délimitant un espace intérieur (6), un premier raccord (3), un deuxième raccord (4), un passage (7) reliant le premier raccord (3) au deuxième raccord (4) de manière à conduire un fluide, un premier organe de fermeture (8) et un deuxième organe de fermeture (9), lesdits organes de fermeture (8, 9) étant reçus dans l'espace intérieur (6) et entourant un espace intermédiaire (12) relié à un troisième raccord (5), et un dispositif de réglage (20) configuré pour, dans une position de fermeture, mettre en contact étanche le premier organe de fermeture (8) avec un premier siège de soupape (10) réalisé dans le passage (7) et le deuxième organe de fermeture (9) avec un deuxième siège de soupape (11) réalisé dans le passage et pour, dans une position d'ouverture, dégager les premier et deuxième organes de fermeture (8, 9) des premier et deuxième sièges de soupape (10, 11), dans laquelle le premier organe de fermeture (8) est reçu de façon étanche dans le deuxième organe de fermeture (9), **caractérisée en ce que** le deuxième organe de fermeture (9) est formé en forme de gobelet, dans laquelle l'espace intermédiaire (12) se trouve à l'intérieur de celui-ci, dans laquelle le premier organe de fermeture (8) peut être reçu de telle façon dans le deuxième organe de fermeture (9), que l'espace intermédiaire (12) est rendu étanche par rapport à l'espace intérieur (6), et **en ce que** le dispositif de réglage (20) est configuré pour former une fente (S) reliant l'espace intermédiaire (12) à l'espace intérieur (6) entre les premier et deuxième organes de fermeture (8, 9), lorsque les premier et deuxième organes de fermeture (8, 9) sont simultanément retirés des premier et deuxième sièges de soupape (10, 11) par le dispositif de réglage (20).

2. Soupape selon la revendication 1, **caractérisée en ce que** le dispositif de réglage (20) comporte un ensemble (28), lequel coopère avec l'un des organes de fermeture (8, 9) et règle celui-ci dans la position d'ouverture par rapport à un autre organe de fermeture (8, 9) par formation de la fente (S).

3. Soupape selon la revendication 2, **caractérisée en ce que** l'ensemble (28) comporte un piston (29) susceptible d'être sollicité par un moyen de pression.

4. Soupape selon la revendication 3, **caractérisée en ce que** le piston (29) coopère avec un épaulement (282) sur une tige de soupape (22) de l'organe de fermeture (9).

5. Soupape selon l'une des revendications 2 à 4, **caractérisée en ce que** le dispositif de réglage (20) comporte au moins deux modules d'actionnement (23, 25, 28).

6. Soupape selon la revendication 5, **caractérisée en ce que** l'ensemble est disposé dans un module d'actionnement indépendant (28).

7. Soupape selon la revendication 5 ou 6, **caractérisée en ce que** le dispositif de réglage (20) comporte un module d'actionnement (23) générant la position d'ouverture de la soupape (1).

8. Soupape selon la revendication 7, **caractérisée en ce que** le module d'actionnement (28) comportant l'ensemble est disposé entre le boîtier (2) et le module d'actionnement (23) générant la position d'ouverture.

9. Soupape selon l'une des revendications 5 à 8, **caractérisée en ce qu'**au moins une tige de soupape (21, 22) de la soupape (1) est conçue en plusieurs pièces.

10. Procédé de nettoyage d'une soupape (1) possédant un espace intermédiaire (12) susceptible d'être délimité par rapport à un espace intérieur (6) par un premier organe de fermeture (8) et un deuxième organe de fermeture (9) et lequel présente un premier siège de soupape (10) associé au premier organe de fermeture (8) et un deuxième siège de soupape (11) associé au deuxième organe de fermeture (9), et le premier organe de fermeture (8) étant mis en contact étanche avec le premier siège de soupape (10) et le deuxième organe de fermeture (9) avec le deuxième siège de soupape (11) dans une position de fermeture de la soupape (1), **caractérisé en ce que** le deuxième organe de fermeture (9) est formé en forme de gobelet, dans lequel l'espace intermédiaire (12) se trouve à l'intérieur de celui-ci, dans lequel le premier organe de fermeture (8) peut être reçu de telle façon dans le deuxième organe de fermeture (9), que l'espace intermédiaire (12) est rendu étanche par rapport à l'espace intérieur (6), et **en ce que** le premier organe de fermeture (8) est mis dans une position retirée par rapport au premier siège de soupape (10) et le deuxième organe de fermeture (9) dans une position retirée par rapport au deuxième siège de soupape (11) et une fente (S) est formée simultanément entre le premier organe de fermeture (8) et le deuxième organe de fermeture (9), laquelle relie l'espace intermédiaire (12) à l'espace intérieur (6).
